# EUROPÄISCHE PATENTSCHRIFT

(11) **EP 1 307 519 B1**
(45) Veröffentlichungstag und Bekanntmachung des Hinweises auf die Patenterteilung: **09.09.2015**
(21) Anmeldenummer: 01960505.4
(22) Anmeldetag: 17.07.2001
(51) Int. Cl.: C09D 5/44, C08J 3/03

(54) **ELEKTROTAUCHLACKE, HERSTELLBAR DURCH SCHMELZEEMULGIERUNG**
ELECTRO IMMERSION LACQUER PRODUCED BY MELT EMULSIFICATION
PEINTURES ELECTROPHORETIQUES PRODUITES PAR EMULSIFICATION D'UN PRODUIT EN FUSION

(30) Priorität: 27.07.2000 DE 10036560
(43) Veröffentlichungstag der Anmeldung: 07.05.2003
(73) Patentinhaber: BASF Coatings GmbH, 48165 Münster (DE)
(72) Erfinder: HARTUNG, Michael, 59590 Geseke (DE); GROSSE-BRINKHAUS, Karl-Heinz, 48301 Nottuln (DE); POLKE, Reinhard, 67112 Mutterstadt (DE); WOLF, Heiko, 67227 Frankenthal (DE); STANG, Michael, 67056 Ludwigshafen (DE)
(86) Internationale Anmeldenummer: PCT/EP2001/008231
(87) Internationale Veröffentlichungsnummer: WO 2002/010294

(56) Entgegenhaltungen:
- EP-A- 0 897 408
- WO-A-00/71608
- US-A- 4 268 368

## Beschreibung

Die vorliegende Erfindung betrifft einen neuen Elektrotauchlack, herstellbar durch Schmelzeemulgierung. Außerdem betrifft die vorliegende Erfindung ein neues Verfahren zur Herstellung des neuen Elektrotauchlacks. Nicht zuletzt betrifft die vorliegende Erfindung die Verwendung der neuen Elektrotauchlacke für die Beschichtung elektrisch leitfähiger Substrate.

Bei der Herstellung von Elektrotauchlacken werden üblicherweise organische Lösemittel angewandt, um die Viskosität der Bindemittel und/oder der Vernetzungsmittel herabzusetzen, damit sie leichter bei niedrigen Temperaturen in den wäßrigen Medien dispergiert werden können. Nachteilig für dieses Verfahren ist, daß die organischen Lösemittel nachträglich durch Destillation aus den Elektrotauchlacken wieder entfernt werden müssen.

Ein Beispiel für diesen Stand der Technik ist die EP 0 897 408, die dortigen Beispiele zeigen, wie Bindemittel mit Hilfe von organischen Lösungsmitteln dispergiert und die Lösungsmittel nach der Dispergierung im Vakuum abgezogen werden.

Aus Gründen des Umweltschutzes und aus Kostengründen ist man jedoch bestrebt, auf die Lösemittel zu verzichten. Insbesondere ist der Destillationsprozeß zeitaufwendig und auch sicherheitstechnisch problematisch.

So ist aus der WO 0071608 ein Verfahren zur Herstellung einer stabilen wässrigen Dispersion oder Emulsion eines Polymers bekannt, indem man das Polymer in einem Extruder aufschmilzt und das geschmolzene Polymer in einem Mischaggregat mit einem wässrigen Medium dispergiert.

Werden bei der Herstellung von Elektrotauchlacken keine organischen Lösemittel verwendet, muß die Viskosität der Bindemittel und/oder der Vernetzungsmittel durch Erhöhung ihrer Temperatur verringert werden, um sie leichter oder überhaupt dispergierbar zu machen. Die hohen Temperaturen verhindern aber das Einbringen selbst von sehr wenig reaktiven Vernetzungsmitteln, weil es mit den Bindemitteln unerwünschten vorzeitigen Vernetzungsreaktionen kommt. Das Einbringen von reaktiven Vernetzungsmitteln, wie sie üblicherweise für sogenannte "Low-bake"-Anwendungen eingesetzt werden, ist dann gar nicht möglich.

Vergleichbare Probleme treten auch bei der Verwendung von selbstvernetzenden Bindemitteln auf.

Aufgabe der vorliegenden Erfindung ist es, einen neuen Elektrotauchlack zu finden, der die Nachteile des Standes der Technik nicht mehr länger aufweist, sondern der zumindest unter Verwendung einer geringeren Menge organischer Lösemittel, als sie bei den Elektrotauchlacken des Standes der Technik üblicherweise notwendig ist, vorzugsweise aber ohne organische Lösemittel, hergestellt werden kann, ohne daß es dabei zu einer vorzeitigen Vernetzung der Bestandteile des Elektrotauchlacks kommt. Dies soll auch dann gewährleistet sein, wenn hoch reaktive Vernetzungsmittel oder hoch reaktive selbstvernetzende Bindemittel verwendet werden. Außerdem sollen die neuen Elektrotauchlacke dasselbe vorteilhafte Eigenschaftsprofil aufweisen wie die Elektrotauchlacke des Standes der Technik, wenn nicht gar dieses übertreffen.

Demgemäß wurde der neue Elektrotauchlack gefunden, der herstellbar ist, indem man
mindestens ein fremdvernetzendes Bindemittel und mindestens ein Vernetzungsmittel separat aufschmilzt, einem Mischaggregat zuführt, worin die Schmelzen homogenisiert werden,
und die resultierende Schmelze in ein wäßriges Medium einbringt und hierin emulgiert, dadurch gekennzeichnet, dass das Mischaggregat ein statischer Mischer ist.

Im folgenden wird der neue Elektrotauchlack als "erfindungsgemäßer Elektrotauchlack" bezeichnet.

Weitere erfindungsgemäße Gegenstände ergeben sich aus der Beschreibung.

Der erfindungsgemäße Elektrotauchlack enthält mindestens ein fremdvernetzendes Bindemittel und mindestens ein Vernetzungsmittel.

Als fremdvernetzend werden Bindemittel bezeichnet, wenn sie die eine Art der komplementären reaktiven funktionellen Gruppen enthalten und die andere Art von einem Härter oder Vernetzungsmittel zur Verfügung gestellt wird. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Als reaktive funktionelle Gruppen der Bindemittel kommen vorzugsweise Thio-, Amino-, Hydroxyl-, Carbamat-, Allophanat-, Carboxy- und/oder (Meth)acrylatgruppen, insbesondere aber Hydroxylgruppen, und als komplementäre funktionelle reaktive Gruppen der Vernetzungsmittel vorzugsweise Anhydrid-, Carboxyl-, Epoxy-, blockierte Isocyanat-, Urethan-, Methylol-, Methylolether-, Amino-, Hydroxy- und/oder beta-Hydroxyalkylamidgruppen, insbesondere aber blockierte Isocyanatgruppen in Betracht.

Damit die Bindemittel in Wasser dispergiert und elektrophoretisch abgeschieden werden können, enthalten sie ionische oder in ionische Gruppen überführbare funktionelle Gruppen.

Hierbei handelt es sich um
(a) funktionelle Gruppen, die durch Neutralisationsmittel und/oder Quaternisierungsmittel in Kationen überführt werden können, und/oder kationische Gruppen oder
(b) funktionelle Gruppen, die durch Neutralisationsmittel in Anionen überführt werden können, und/oder anionische Gruppen.

Die Bindemittel mit funktionellen Gruppen (a) werden in kathodisch abscheidbaren erfindungsgemäße Elektrotauchlacken verwendet, wogegen die Bindemittel mit funktionellen Gruppen (b) in anodisch abscheidbaren erfindungsgemäßen Elektrotauchlacken angewandt werden.

Beispiele geeigneter erfindungsgemäß zu verwendender funktioneller Gruppen (a), die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter erfindungsgemäß zu verwendender kationischer Gruppen (a) sind primäre, sekundäre, tertiäre oder quaternäre Ammoniumgruppen, tertiäre Sulfoniumgruppen oder quaternäre Phosphoniumgruppen, vorzugsweise quaternäre Ammoniumgruppen oder tertiäre Sulfoniumgruppen, insbesondere aber quaternäre Ammoniumgruppen.

Beispiele geeigneter erfindungsgemäß zu verwendender funktioneller Gruppen (b), die durch Neutralisationsmittel in Anionen überführt werden können, sind Carbonsäure-, Sulfonsäure- oder Phosphonsäuregruppen, insbesondere Carbonsäuregruppen.

Beispiele geeigneter erfindungsgemäß zu verwendender anionischer Gruppen (b) sind Carboxylat-, Sulfonat- oder Phosphonatgruppen, insbesondere Carboxylatgruppen.

Die Auswahl der Gruppen (a) oder (b) ist so zu treffen, daß keine störenden Reaktionen mit den vorstehend beschriebenen komplementären reaktiven funktionellen Gruppen möglich sind. Der Fachmann kann daher die Auswahl in einfacher Weise anhand seines Fachwissens treffen.

Beispiele geeigneter Neutralisationsmittel für in Kationen umwandelbare funktionelle Gruppen (a) sind anorganische und organische Säuren wie Schwefelsäure, Amidoschwefelsäure (Amidosulfonsäure), C₁-C₁₀-Sulfonsäuren wie Methansulfonsäure oder Hexansulfonsäure, Salzsäure, Phosphorsäure, Ameisensäure, Essigsäure, Milchsäure, Dimethylolpropionsäure oder Zitronensäure, insbesondere Ameisensäure, Essigsäure oder Milchsäure.

Beispiele für geeignete Neutralisationsmittel für in Anionen umwandelbare funktionelle Gruppen (b) sind Ammoniak, Ammoniumsalze, wie beispielsweise Ammoniumcarbonat oder Ammoniumhydrogencarbonat, sowie Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen.

Im allgemeinen wird die Menge an Neutralisationsmittel so gewählt, daß 1 bis 100 Äquivalente, bevorzugt 30 bis 90 Äquivalente der funktionellen Gruppen (a) oder (b) des Bindemittels neutralisiert werden.

Beispiele geeigneter Bindemitel für anodische abscheidbare erfindungsgemäße Elektrotauchlacke sind aus der Patentschrift DE-OS 28 24 418 bekannt. Hierbei handelt es sich vorzugsweise um Polyester, Epoxydharzester, Poly(meth)acrylate, Maleinatöle oder Polybutadienöle mit einem gewichtsmittleren Molekulargewicht von 300 bis 20.000 Dalton und einer Säurezahl von 35 bis 300 mg KOH/g.

Beispiele geeigneter Bindemittel für kathodisch abscheidbare erfindungsgemäße Elektrotauchlacke sind aus den Patentanmeldungen EP 0 004 090 A 1, EP 0 059 895 A 1, EP 0 012 463 A 1, EP 0 082 291 A 1, EP 0 234 395 A 1, EP 0 227 975 A 1, EP 0 178 531 A 1, EP 0 333 327 A 1, EP 0 310 971 A 1, EP 0 456 270 A 1, US 3,799,854 A 1, US 3,948,299 A 1, US 3,922,253 A 1, US 4,031,050 A 1, US 4,252,703 A 1, US 4,332,711 A 1, EP 0 261 385 A 1, EP 0 245 786 A 1, DE 27 01 002 A 1, DE 31 03 642 A 1, DE 31 08 073 A 1, DE 33 24 211 A 1, EP 0 414 199 A 1, EP 0 476 514 A 1, EP 0 640 700 A 1 oder WO 98/33835 bekannt. Hierbei handelt es sich vorzugsweise um primäre, sekundäre, tertiäre oder quaternäre Amino- oder Ammoniumgruppen und/oder tertiäre Sulfoniumgruppen enthaltende Harze (A) mit Aminzahlen vorzugsweise zwischen 20 und 250 mg KOH/g und einem gewichtsmittleren Molekulargewicht von vorzugsweise 300 bis 20.000 Dalton. Insbesondere werden Amino(meth)acrylatharze, Aminoepoxidharze, Aminoepoxidharze mit endständigen Doppelbindungen, Aminoepoxidharze mit primären und/oder sekundären Hydroxylgruppen, Aminopolyurethanharze, aminogruppenhaltige Polybutadienharze oder modifizierte Epoxidharz-Kohlendioxid-Amin-Umsetzungsprodukte verwendet.

Der Gehalt der erfindungsgemäßen Elektrotauchlacke an den vorstehend beschriebenen Bindemitteln kann sehr breit variieren.

Im Falle der fremdvernetzenden Bindemittel beträgt er vorzugsweise 40 bis 95, bevorzugt 50 bis 90 und insbesondere 55 bis 85 Gew.-%, jeweils bezogen auf den Festkörper des erfindungsgemäße Elektrotauchlacks.

Im Rahmen der vorliegenden Erfindung ist unter "Festkörper" derjenige Anteil des erfindungsgemäßen Elektrotauchlacks zu verstehen, der nach der thermischen Härtung der elektrophoretisch abgeschieden Elektrotauchlackschicht die Elektrotauchlackierung bildet.

Vorzugsweise werden kathodisch abscheidbare erfindungsgemäße Elektrotauchlacke verwendet.

Vorzugsweise enthalten die erfindungsgemäßen Elektrotauchlacke Vernetzungsmittel.

Beispiele geeigneter Vernetzungsmittel sind blockierte organische Polyisocyanate, insbesondere blockierte sogenannte Lackpolyisocyanate, mit aliphatisch, cycloaliphatisch, araliphatisch und/oder aromatisch gebundenen, blockierten Isocyanatgruppen.

Bevorzugt werden zu ihrer Herstellung Polyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Außerdem können die Polyisocyanate in üblicher und bekannter Weise hydrophil oder hydrophob modifiziert sein.

Beispiele für geeignete Polyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-octan, 1,7-Diisocyanato-4-isocyanatomethylheptan und/oder 1-Isocyanato-2-(3-isocyanatopropyl)cyclohexan eingesetzt.

Beispiele für geeignete Blockierungsmittel zur Herstellung der blockierten Polyisocyanate sind die aus der US-Patentschrift US-A-4,444,954 bekannten Blockierungsmittel wie
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol, Trimethylolpropan oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) Gemische dieser Blockierungsmittel, insbesondere Dimethylpyrazol und Triazole, Malonester und Acetessigsäureester, Dimethylpyrazol und Succinimid oder Ethylenglykolmonopropylether und Trimethylolpropan.

Weitere Beispiele für geeignete Vernetzungsmittel sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Als Vernetzungsmittel können auch Tris(alkoxycarbonylamino)triazine (TACT) der allgemeinen Formel 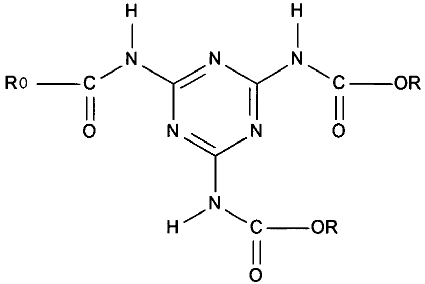 eingesetzt werden.

Beispiele geeigneter Tris(alkoxycarbonylamino)triazine (B) werden in den Patentschriften US 4,939,213 A 1, US 5,084,541 A 1 oder EP 0 624 577 A 1 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Weitere Beispiele geeigneter Vernetzungsmittel sind Aminoplastharze, beispielsweise Melamin-, Guanamin-, Benzoguanamin- oder Harnstoffharze. Dabei kommen auch die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A 1 und EP 0 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vernetzungsmittel sind Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentanmeldung EP 0 596 460 A 1 beschrieben werden.

Besonders bevorzugt werden die blockierten Polyisocyanate verwendet.

Die Menge der Vernetzungsmittel in den erfindungsgemäße Elektrotauchlacken kann breit variieren und richtet sich insbesondere zum einen nach der Funktionalität der Vernetzungsmittel und zum anderen nach der Anzahl der im Bindemittel vorhandenen komplementären reaktiven funktionellen Gruppen sowie nach der Vernetzungsdichte, die man erzielen will. Der Fachmann kann daher die Menge der Vernetzungsmittel aufgrund seines allgemeinen Fachwissens, gegebenenfalls unter Zuhilfenahme einfacher orientierender Versuche ermitteln. Vorteilhafterweise ist das Vernetzungsmittel in den erfindungsgemäßen Elektrotauchlack in einer Menge von 5 bis 60 Gew.-%, besonders bevorzugt 10 bis 50 Gew.-% und insbesondere 15 bis 45 Gew.-%, jeweils bezogen auf den Festkörper des erfindungsgemäßen Elektrotauchlacks, enthalten. Hierbei empfiehlt es sich des weiteren, die Mengen an Vernetzungsmittel und Bindemittel so zu wählen, daß in den erfindungsgemäßen Elektrotauchlacken das Verhältnis von reaktiven funktionellen Gruppen im Vernetzungsmittel und komplementären reaktiven funktionellen Gruppen im Bindemittel zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Der erfindungsgemäße Elektrotauchlack kann lackübliche Additive in wirksamen Mengen enthalten. Beispiele geeigneter Additive sind
- organische und/oder anorganische Pigmente, Korrosionsschutzpigmente und/oder Füllstoffe wie Calciumsulfat, Bariumsulfat, Silikate wie Talk oder Kaolin, Kieselsäuren, Oxide wie Aluminiumhydroxid oder Magnesiumhydroxid, Nanopartikel, organische Füllstoffe wie Textilfasern, Cellulosefasern, Polyethylenfasern oder Holzmehl, Titandioxid, Ruß, Eisenoxid, Zinkphosphat oder Bleisilikat; diese Additive können auch über Pigmentpasten in die erfindungsgemäßen Elektrotauchlacke eingearbeitet werden, wobei als Reibharze die vorstehend beschriebenen Bindemittel in Betracht kommen;
- Antikratermittel, wie sie in der europäischen Patentanmeldung EP 0 301 293 A 1 beschrieben werden;
- wasserlösliche Polymere wie Polyvinylalkohole oder wässerlösliche Celluloseether, wie sie aus der europäischen Patentanmeldung EP 0 640 700 A 1 bekannt sind;
- Radikalfänger;
- organische Korrosionsinhibitoren;
- Katalysatoren für die Vernetzung wie anorganische und organische Salze und Komplexe des Zinns, Bleis, Antimons, Bismuts, Eisens oder Mangans, vorzugsweise organische Salze und Komplexe des Wismuts und des Zinns, insbesondere Bismutlactat, -ethylhexanoat oder -dimethylolpropionat, Bismut-Aminosäure-Komplexe, Dibutylzinnoxid oder Dibutylzinndilaurat oder -dioleat;
- Slipadditive;
- Polymerisationsinhibitoren;
- Entschäumer;
- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen, Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polurethane;
- Haftvermittler;
- Verlaufmittel;
- filmbildende Hilfsmittel wie Cellulose-Derivate;
- Flammschutzmittel;
- thermisch vernetztbare Reaktivverdünner, wie stellungsisomere Diethyloctandiole, Hydroxylgruppen enthaltende hyperverzweigte Verbindungen oder Dendrimere, wie sie in den Patentanmeldungen DE 198 09 643 A 1, DE 198 40 605 A 1 oder DE 198 05 421 A 1 beschrieben werden; oder
- Biozide;

Weitere Beispiele geeigneter Lackadditive werden in dem Lehrbuch "Lackadditive" von Johan Bieleman, Wiley-VCH, Weinheim, New York, 1998, beschrieben.

Der erfindungsgemäße Elektrotauchlack ist durch das erfindungsgemäße Verfahren herstellbar.

In einer bevorzugten Variante des erfindungsgemäßen Verfahrens werden mindestens eines der vorstehend beschriebenen fremdvernetzenden Bindemittel und mindestens eines der vorstehend beschriebenen Vernetzungsmittel separat aufgeschmolzen und einem Mischaggregat zugeführt, worin die Schmelzen homogenisiert werden. Die resultierende Schmelze wird in ein wäßriges Medium eingebracht und hierin emulgiert.

Dabei können sowohl die Bindemittel und/oder die Vernetzungsmittel mindestens eines der vorstehend beschriebenen Additive enthalten, sofern diese nicht den Schmelzevorgang, beispielsweise durch Zersetzung oder chemische Reaktionen, stören.

Vorzugsweise enthält das wäßrige Medium mindestens eines der vorstehend beschriebenen Neutralisationsmittel in Mengen, die ausreichen, die vorstehend beschriebenen Bindemittel stabil zu dispergieren. Besonders bevorzugte Neutralisationsmittel sind die vorstehend beschriebenen Säuren. Darüber hinaus kann das wäßrige Medium noch mindestens eines der vorstehend beschriebenen Additive enthalten.

Die Temperaturen der Schmelzen können breit variieren. So dürfen die Temperaturen nicht so hoch gewählt werden, daß sich die Bindemittel oder die Vernetzungsmittel thermisch zersetzen und/oder vorzeitig vernetzen. Andererseits dürfen die Temperaturen nicht so niedrig sein, daß die Schmelzen wegen einer zu hohen Viskosität nicht mehr gut miteinander vermischt und in dem wäßrigen Medium dispergiert werden können. Vorzugsweise werden Temperaturen zwischen 40 und 160, bevorzugt 50 und 140 und insbesondere 70 und 130°C angewandt.

Als Mischaggregate können bei dem erfindungsgemäßen Verfahren sämtliche üblichen und bekannten Mischaggregate verwendet werden, die für die homogene Vermischung von vergleichsweise viskosen Schmelzen geeignet sind. Beispiele geeigneter Mischaggregate sind statische Mischer vom Typ Sulzer, die von der Firma Sulzer Chemtech GmbH vertrieben werden. Dabei können die Schmelzen einmal oder mehrmals im Kreis durch die Mischaggregate gefahren werden. Es können indes auch mindestens zwei Mischaggregate hintereinander geschaltet werden.

Zur Emulgierung der Schmelze in Wasser können bei dem erfindungsgemäßen Verfahren sämtliche üblichen und bekannten Vorrichtungen verwendet werden, wie sie üblicherweise bei der Emulgierung flüssiger bzw. geschmolzener Stoffe in Wasser verwendet werden. Beispiele geeigneter Vorrichtungen dieser Art sind die vorstehend beschriebenen statischen Mischer, Rotor-Stator-Systeme oder Hochdruckhomogenisatoren.

Beispiele geeigneter Rotor-Stator-Systeme sind schnell laufende Rührer (Ultraturrax), Naßrotormühlen, In-line-Dissolver oder Zahnkranz-Dispergieraggregate, wie sie beispielsweise in der europäischen Patentanmeldung EP 0 648 537 A 1 beschrieben und unter dem Handelsnamen "K-Generatoren" von der Firma Kinematica AG, Luzern, Schweiz, vertrieben werden.

Beispiele geeigneter Hochdruckhomogenisatoren sind solche, die nach dem Gegenstrahlprinzip arbeiten, wie sie beispielsweise in der europäischen Patentanmeldung EP 0 401 565 A 1 beschrieben werden.

Bei dem erfindungsgemäßen Verfahren können die Schmelze und das wäßrige Medium einmal oder mehrmals im Kreis durch eine der vorstehend beschriebenen Vorrichtungen gefahren werden. Es können aber auch mindestens zwei dieser Vorrichtungen hintereinander geschaltet werden.

Bei der Emulgierung der Schmelze in dem wäßrigen Medium bildet sich die diskontinuierliche Phase der Emulsion in der Form von Tröpfchen. Deren mittlerer Größe kann sehr breit variieren und richtet sich vor allem nach der Temperatur der Schmelze, deren Viskosität und dem Scherfeld, das in der Vorrichtung herrscht. Vorzugsweise liegt die mittlere Tröpfchengröße bei 40 bis 1.000, vorzugsweise 60 bis 500 und insbesondere 70 bis 200 nm.

Im weiteren Verlauf des erfindungsgemäßen Verfahrens wird die resultierende Emulsion vorzugsweise auf Raumtemperatur abgekühlt, indem sie beispielsweise durch ein Kühlaggregat, insbesondere einen Wärmeaustauscher, gefahren wird. Der resultierende erfindungsgemäße Elektrotauchlack kann als solcher für die elektrophoretische Abscheidung verwendet werden. Vorzugsweise wird er mit Wasser weiter verdünnt, so daß sich bevorzugt ein Festkörpergehalt von 5 bis 60, besonders bevorzugt 6 bis 55 und insbesondere 7 bis 50 Gew.-%, jeweils bezogen auf den Festkörper des erfindungsgemäßen Elektrotauchlacks, einstellt.

Der erfindungsgemäße Elektrotauchlack kann desweiteren mit mindestens einem der vorstehend beschriebenen Additive, vorzugsweise mindestens einen Pigment und/oder Füllstoff, insbesondere in der Form mindestens einer Pigmentpaste, versetzt werden.

Das vorstehend beschriebene erfindungsgemäße Verfahren kann kontinuierlich oder diskontinuierlich durchgeführt werden.

Der erfindungsgemäße Elektrotauchlack kann mit Hilfe der unterschiedlichsten Applikationsverfahren auf Substrate aufgebracht werden. Erfindungsgemäß ist es jedoch von Vorteil, ihn elektrophoretisch auf elektrisch leitfähigen Substrate wie Kraftfahrzeugkarosserien oder Teile hiervon abzuscheiden.

Zu diesem Zweck wird das elektrisch leitfähige Substrat in ein erfindungsgemäße Elektrotauchlackbad gemäß den vorstehenden Ausführungen getaucht, das Substrat als Kathode oder Anode, vorzugsweise als Kathode, geschaltet, durch Gleichstrom ein Film auf dem Substrat abgeschieden, das lackierte Substrat aus dem Elektrotauchlackbad entfernt und die abgeschiedene Elektrotauchlackschicht entweder eingebrannt oder nur getrocknet.

Die eingebrannte Elektrotauchlackierung kann anschließend mit einem Füller oder einem Steinschlagschutzlack und einem Unidecklack oder, alternativ, mit einem Basislack und einem Klarlack überschichtet werden. Danach werden die Füllerschicht oder die Steinschlagschutzlackschicht und die Unidecklackschicht üblicherweise separat eingebrannt, wogegen der Basislack und der Klarlack vorzugsweise nach dem Naß-in-naß-Verfahren appliziert und die resultierende Basislackschicht und Klarlackschicht gemeinsam eingebrannt werden.

Die getrocknete Elektrotauchlackschicht kann "naß-in-naß" mit einem Füller oder Steinschlagschutzlack oder einem Basislack beschichtet werden, wonach die Elektrotauchlackschicht und die Füllerschicht oder Steinschlagschutzlackschicht oder die Basislackschicht gemeinsam eingebrannt werden (vgl. die europäischen Patentanmeldung EP 0 817 614 A 1).

Die resultierenden erfindungsgemäßen Elektrotauchlackierungen weisen einen hervorragenden Umgriff, einen hervorragenden Kantenschutz und, wenn überhaupt, nur eine sehr geringe Anzahl an Oberflächenstörungen wie Krater auf. Die Haftung der Elektrotauchlackierungen zu dem Substrat und zu den Füllerlackierungen oder Steinschlagschutzgrundierungen oder Basislackierungen ist ausgezeichnet. Wegen der ausgezeichneten glatten Oberfläche der erfindungsgemäßen Elektrotauchlackierungen haben auch die darüberliegenden Lackierungen eine besonders gute, von Oberflächenstörungen freie Oberfläche.

Die resultierenden erfindungsgemäßen farb- und/oder effektgebenden Mehrschichtlackierungen weisen ein hervorragendes Eigenschaftsprofil auf, weswegen sie auch auf dem technologisch besonders anspruchsvollen Gebit der Automobilserienlackierung mit Vorteil verwendet werden können.

### Beispiele

### Herstellbeispiel 1

### Die Herstellung eines erfindungsgemäß zu verwendenden Vernetzungmittels

In einem Reaktor, der mit Rückflußkühler, Innenthermometer und Inertgaseinleitung ausgestattet war, wurden 810 Gewichtsteile Isomere und höherfunktionelle Oligomere auf Basis von 4,4'-Diphenylmethandiisocyanat mit einem Isocyanatäquivalentgewicht von 135 (Basonat® A 270 der Firma BASF Aktiengesellschaft) unter Stickstoffatmosphäre vorgelegt. Man gab 0,6 Gewichtsteile Dibutylzinndilaurat hinzu und tropfte unter Rühren 988 Gewichtsteile Butyldiglykol mit einer solchen Geschwindigkeit hinzu, daß die Temperatur des Redaktionsgemischs unter 60°C blieb. Nach der Zugabe wurde das Reaktionsgemisch während zwei Stunden bei 100°C gehalten. Hiernach waren keine freie Isocyanatgruppen mehr nachweisbar. Das resultierende blockierte Polyisocyanat wurde mit 87 Gewichtsteilen Phenoxypropanol und 87 Gewichtsteilen Butoxypropanol versetzt und auf 70°C abgekühlt. Der Festkörpergehalt lag bei 90%.

### Herstellbeispiel 2

### Die Herstellung eines erfindungsgemäß zu verwendenden Bindemittels

In einem Reaktor, der mit Rückflußkühler, Innenthermometer und Inertgaseinleitung ausgestattet war, wurden 1.177 Gewichtsteile eines handelsüblichen Epoxidharzes auf Basis von Bisphenol A mit einem Epoxidäquivalentgewicht von bei 188, 92 Gewichtsteile Phenol, 268 Gewichtsteile Bisphenol A und 46 Gewichtsteile Butoxypropanol vorgelegt und unter Stickstoff unter Rühren auf 130°C aufgeheizt. Hiernach wurden unter Rühren 1,5 Gewichtsteile Tripjhenylphosphin hinzugegeben, worauf eine exotherme Reaktion eintrat und die Temperatur auf 155°C. Anschließend wurde das Reaktionsgemisch auf 130°C abgekühlt, und es wurde das Epoxidäquivalentgewicht bestimmt. Der Sollwert lag bei 520 bis 530. Nach Erreichen dieses Wertes wurden 160 Gewichtsteile eines handelsüblichen Polyalkylenglykols (Pluriol® P 600 der Firma BASF Aktiengesellschaft) unter Kühlen hinzugegeben. Bei Erreichen von 95°C wurden 113 Gewichtsteile Diethanolamin hinzugegeben, worauf eine exotherme Reaktion eintrat und die Temperatur auf 115°C anstieg. Nach weiteren 40 Minuten bei 115°C gab man 55 Gewichtsteile N,N-Dimethylaminopropylamin hinzu. Hierbei stieg die Temperatur kurz auf 140°C an. Anschließend ließ man das Reaktionsgemisch während zwei Stunden bei 130°C weiter reagieren, bis seine Viskosität konstant blieb. Der Festkörpergehalt des Reaktionsgemischs lag bei 97,5%.

### Herstellbeispiel 3

### Die Herstellung eines wäßrigen Mediums

In einem Vorlagebehälter wurden 2.024 Gewichtsteile deionisiertes Wasser und 41 Gewichtsteile einer 85%igen wäßrigen Ameisensäurelösung miteinander vermischt.

### Herstellbeispiel 4

### Die Herstellung einer Pigmentpaste

Die Pigmentpaste wurde, wie in der internationalen Patentanmeldung WO 98/33835, Seite 22, Zeile 23, bis Seite 23, Zeile 30, 3. Kationische, wasserlösliche Reibharze, 3.1 Reibharz A, Tabelle 1: Wäßrige Pigmentpasten, Pigmentpaste B, beschrieben, hergestellt.

### Beispiel 1

### Die Herstellung eines erfindungsgemäßen Elektrotauchlacks durch Schmelzeemulgierung

Für die Durchführung des Beispiels 1 wurden
- 888 Gewichtsteile des Vernetzungsmittels gemäß Herstellbeispiel 1,
- 1.913 Gewichtsteile des Epoxidharzes gemäß Herstellbeispiel 2 und
- 2.065 Gewichtsteile des wäßrigen Mediums gemäß Herstellbeispiel 3
verwendet.

Das Epoxidharz und das Vernetzungsmittel wurden separat auf 100°C aufgeheizt und dabei geschmolzen. Über jeweils eine Pumpe wurden die Epoxidharzschmelze und die Vernetzungsmittelschmelze im Gewichtsverhältnis von 68,3 : 31,7 gleichmäßig durch einen statischen Mischer gefördert und auf diese Weise homogenisiert. Als statischer Mischer wurde ein Mischer vom Typ Sulzer SMX verwendet. Die resultierende Schmelze wurde in das auf 23°C erwärmte, wäßrige Medium gefahren und dort durch Rühren in feine Tröpfchen zerteilt, so daß eine Emulsion resultierte. Nach der Schmelzeemulgierung wurde der resultierende Elektrotauchlack mit 1.330 Gewichtsteilen deionisiertem Wasser weiter verdünnt und auf Raumtemperatur abgekühlt. Der verdünnte Elektrotauchlack war völlig absetztstabil; selbst nach drei Monaten Lagerung bei Raumtemperatur zeigte sich kein Bodensatz. Der Elektrotauchlack wies die folgenden Kennzahlen auf:
Festkörpergehalt (1 Stunde/30°C): 43 Gew.-%,
MEQ-Base: 0,8 meg/g Festharz,
MEQ-Säure: 0,28 meg/g Festharz,
pH-Wert: 5,8,
Viskosität: 20s (DIN 4-Becher bei 23°C) und
z-mittlerer Teilchendurchmesser: 50 bis 100 nm.

### Vergleichsbeispiel 2

### Die Herstellung eines Elektrotauchlacks durch Schmelzeemulgierung

Beispiel 1 wurde wiederholt, nur daß die homogenisierte Schmelze über ein Injektionsrohr gleichmäßig in das wäßrige Medium gefördert wurde, und die resultierende Mischung gleichmäßig in ein dreistufiges Zahnkranz-Dispergieraggregat ("K-Generator" der Firma Kinematica AG, Luzern, Schweiz) gepumpt und darin dispergiert wurde.

Der resultierende verdünnte Elektrotauchlack wies dieselben vorteilhaften Eigenschaften wie derjenige des Beispiels 1 auf.

### Beispiele 3 und 4

### Die Verwendung des Elektrotauchlacks des Beispiels 1 und des Vergleichsbeispiels 2 für die Herstellung von Elektrotauchlackierungen

Für das Beispiel 3 wurde ein Elektrotauchlackbad aus 2.135 Gewichtsteilen des Elektrotauchlacks des Beispiels 1, 603 Gewichtsteilen der Pigmentpaste des Herstellbeispiels 4 und 2.263 Gewichtsteilen deionisiertes Wasser hergestellt.

Für das Beispiel 4 wurde wurde ein Elektrotauchlackbad aus 2.135 Gewichtsteilen des Elektrotauchlacks des Beispiels 2, 603 Gewichtsteilen der Pigmentpaste des Herstellbeispiels 4 und 2.263 Gewichtsteilen deionisiertes Wasser hergestellt.

Die Elektrotauchlackbäder wurden während 3 Tagen bei Raumtemperatur unter Rühren gealtert. Ihre wesentlichen anwendungstechnischen Eigenschaften und Bedingungen der Abscheidung sind in der Tabelle zusammengestellt.

**Tabelle: Anwendungstechnische Eigenschaften der Elektrotauchlackbäder und Bedingungen ihrer Abscheidung**

| | **Beispiel:** | |
|---|---|---|
| **Merkmal** | **1** | **2** |
| pH-Wert | 5,9 | 6 |
| Leitwert (mS/cm) | 1,9 | 1,9 |
| Badtemperatur (°C) | 28 | 28 |
| Abrißspannung (V) | 350 | 350 |
| Abscheidespannung (V) | 220 | 220 |

Die Abscheidung der Elektrotauchlackschichten erfolgte während zwei Minuten auf kathodisch geschalteten, zinkphosphatierten Stahlprüftafeln, die nicht mit Chrom(VI) nachgespült worden waren. Die beschichteten Stahlprüftafeln wurden den Elektrotauchlackbädern entnommen. Die hierauf befindlichen Elektrotauchlackschichten wurden mit deionisiertem Wasser nachgespült und anschließend während 15 Minuten bei 175°C (Objekttemperatur) eingebrannt.

Die resultierenden Elektrotauchlackierungen der Beispiele 3 und 4 wiesen eine Trockenschichtdicke von 22 µm auf. Ihr Verlauf war hervorragend. Sie waren völlig lösemittelstabil und widerstanden mehr als 100 Doppelhüben mit einem mit Methylethyleton getränkten Wattebausch. Ihre Erichsen-Tiefung lag bei 7 mm. Ihre Korrosionsschutzwirkung war hervorragend.

## Patentansprüche

1. Elektrotauchlack, herstellbar, indem man
mindestens ein fremdvernetzendes Bindemittel und mindestens ein Vernetzungsmittel separat aufschmilzt, einem Mischaggregat zuführt,
worin die Schmelzen homogenisiert werden,
und die resultierende Schmelze in ein wäßriges Medium einbringt und hierin emulgiert,
**dadurch gekennzeichnet, daß** das Mischaggregat ein statischer Mischer ist.

2. Elektrotauchlack nach Anspruch 1, **dadurch gekennzeichnet, daß** das wäßrige Medium mindestens ein Neutralisationsmittel enthält.

3. Elektrotauchlack nach Anspruch 2, **dadurch gekennzeichnet, daß** das Neutralisationsmittel mindestens eine Säure ist.

4. Elektrotauchlack nach einem der Ansprüche 1 bis 3, **dadurch gekennzeichnet, daß** die Schmelze in einem statischen Mischer, einem Rotor-Stator-System oder einem Hochdruckhomogenisator in dem wäßrigen Medium emulgiert wird.

5. Elektrotauchlack nach Anspruch 4, **dadurch gekennzeichnet, daß** man einen Hochdruckhomogenisator verwendet, der nach dem Gegenstrahlprinzip arbeitet.

6. Elektrotauchlack nach Anspruch 4, **dadurch gekennzeichnet, daß** man als Rotor-Stator-System einen schnellaufenden Rührer (Ultraturrax), eine Naßrotormühle, einen In-line-Dissolver oder ein Zahnkranz-Dispergieraggregat verwendet.

7. Elektrotauchlack nach einem der Ansprüche 1 bis 6, **dadurch gekennzeichnet, daß** die diskontinuierlichen Phase der Emulsion eine mittlere Tröpfchengröße von 40 bis 1.000 nm hat.

8. Verwendung des Elektrotauchlacks gemäß einem der Ansprüche 1 bis 7 für die Beschichtung elektrisch leitfähiger Substrate.

9. Verfahren zur Beschichtung elektrisch leitfähiger Substrate durch elektrophoretische Abscheidung eines Elektrotauchlacks auf den Substraten und thermische Härtung der resultierenden Elektrotauchlackschicht für sich alleine oder gemeinsam mit mindestens einer hierauf befindlichen weiteren Lackschicht, **dadurch gekennzeichnet, daß** man hierbei einen Elektrotauchlack gemäß einem der Ansprüche 1 bis 7 verwendet.

## Claims

1. Electrodeposition coating material preparable by separately melting at least one externally crosslinking binder and at least one crosslinking agent and supplying the melts to a mixing unit in which the melts are homogenized, introducing the resultant melt into an aqueous medium, and emulsifying it therein, **characterized in that** the mixing unit is a static mixer.

2. Electrodeposition coating material according to Claim 1, **characterized in that** the aqueous medium comprises at least one neutralizing agent.

3. Electrodeposition coating material according to Claim 2, **characterized in that** the neutralizing agent is at least one acid.

4. Electrodeposition coating material according to any of Claims 1 to 3, **characterized in that** the melt is emulsified in the aqueous medium in a static mixer, in a rotor-stator system or in a high-pressure homogenizer.

5. Electrodeposition coating material according to Claim 4, **characterized in that** a high-pressure homogenizer is used which operates in accordance with the opposed-jet principle.

6. Electrodeposition coating material according to Claim 4, **characterized in that** said rotor-stator system comprises a high-speed stirrer (Ultraturrax), a wet rotor mill, an in-line dissolver, or a toothed-wheel dispersing unit.

7. Electrodeposition coating material according to any of Claims 1 to 6, **characterized in that** the discontinuous phase of the emulsion has an average droplet size of 40 to 1000 nm.

8. Use of the electrodeposition coating material according to any of Claims 1 to 7 to coat electrically conductive substrates.

9. Process for coating electrically conductive substrates by electrophoretically depositing an electrodeposition coating material on the substrates and thermally curing the resultant electrodeposition coating film alone or together with at least one further coating film present thereon, **characterized in that** an electrodeposition coating material according to any of Claims 1 to 7 is used.

## Revendications

1. Peinture pour dépôt électrolytique, pouvant être fabriquée par
fusion séparée d'au moins un liant à réticulation externe et d'au moins un agent de réticulation, introduction dans un appareil de mélange où les masses fondues sont homogénéisées,
et introduction de la masse fondue résultante dans un milieu aqueux et émulsification dans celui-ci,
**caractérisée en ce que** l'appareil de mélange est un mélangeur statique.

2. Peinture pour dépôt électrolytique selon la revendication 1, **caractérisée en ce que** le milieu aqueux contient au moins un agent de neutralisation.

3. Peinture pour dépôt électrolytique selon la revendication 2, **caractérisée en ce que** l'agent de neutralisation est au moins un acide.

4. Peinture pour dépôt électrolytique selon l'une quelconque des revendications 1 à 3, **caractérisée en ce que** la masse fondue est émulsifiée dans le milieu aqueux dans un mélangeur statique, un système rotor-stator ou un homogénéisateur haute pression.

5. Peinture pour dépôt électrolytique selon la revendication 4, **caractérisée en ce qu'**un homogénéisateur haute pression est utilisé, qui fonctionne selon le principe des jets opposés.

6. Peinture pour dépôt électrolytique selon la revendication 4, **caractérisée en ce qu'**un agitateur rapide (Ultraturrax), un broyeur à rotor humide, un dissolveur en ligne ou un appareil de dispersion à couronne est utilisé en tant que système rotor-stator.

7. Peinture pour dépôt électrolytique selon l'une quelconque des revendications 1 à 6, **caractérisée en ce que** la phase discontinue de l'émulsion a une taille de gouttelette moyenne de 40 à 1 000 nm.

8. Utilisation de la peinture pour dépôt électrolytique selon l'une quelconque des revendications 1 à 7 pour le revêtement de substrats électriquement conducteurs.

9. Procédé de revêtement de substrats électriquement conducteurs par dépôt électrophorétique d'une peinture pour dépôt électrolytique sur les substrats et durcissement thermique de la couche de peinture pour dépôt électrolytique résultante seule ou conjointement avec au moins une couche de peinture supplémentaire se trouvant sur celle-ci, **caractérisé en ce qu'**une peinture pour dépôt électrolytique selon l'une quelconque des revendications 1 à 7 est utilisée.
